# EUROPEAN PATENT SPECIFICATION

(11) **EP 2 108 806 B1**
(45) Date of publication and mention of the grant of the patent: **12.09.2012**
(21) Application number: 09250923.1
(22) Date of filing: 30.03.2009
(51) Int. Cl.: F02K 1/08, F02K 1/06, F02K 3/077

(54) **Gas turbine engine systems involving variable nozzles with sliding doors**
Gasturbinenmotorsystem mit verstellbaren Düsen und Schiebetüren
Systèmes de moteur à turbine à gaz impliquant des buses variables avec des portes coulissantes

(30) Priority: 10.04.2008 US 100470
(43) Date of publication of application: 14.10.2009
(73) Proprietor: United Technologies Corporation, Hartford, CT 06101 (US)
(72) Inventor: Petty, Dale William, Wallingford CT, 06492 (US); Murphy, Michael Joseph, Windsor CT, 06095 (US); McMahon, Shawn M., Manchester CT, 06040 (US); Zamora, Sean P., Coventry CT, 06238 (US); Swanson, Timothy A., Coventry CT, 06238 (US)
(74) Representative: Leckey, David Herbert

(56) References cited:
- EP-A- 1 619 376
- CA-A1- 1 029 201
- DE-B- 1 081 277
- FR-A- 2 184 021
- FR-A- 2 499 158
- GB-A- 862 405
- US-A- 2 737 015
- US-A- 3 841 091
- US-A1- 2007 018 034

## Description

### BACKGROUND

### Technical Field

The disclosure generally relates to gas turbine engines.

### Description of the Related Art

Varying the nozzle exhaust area of a gas turbine engine can affect engine performance. By way of example, varying the nozzle exhaust area can alter propulsive efficiency, fan stability, noise output, and/or fuel consumption.

FR-A-2,184-021 discusses fan gas turbine engines having variable pitch nozzles. CA-A-1,029,201 discloses a nozzle and auxiliary inlet arrangement for gas turbine engine. EP-A-1,619,376 discloses a split shroud exhaust nozzle. US-A-3,841,091 discloses a multi-mission tandem propulsion system. DE-B-1,081,277 describes gas turbine engines having two combustion chambers. GB-A-862,405 discloses a variable area jet propulsion nozzle. FR-A-2,499,158 describes an apparatus for reduction of residual thrust in gas turbine engines.

### SUMMARY

Gas turbine engine systems involving variable nozzles with sliding doors are provided.

The present invention provides a gas turbine engine according to claim 1.

Other systems, methods, features and/or advantages of this disclosure will be or may become apparent to one with skill in the art upon examination of the following drawings and detailed description. It is intended that all such additional systems, methods, features and/or advantages be included within this description and be within the scope of the present disclosure.

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic diagram depicting an exemplary embodiment of a gas turbine engine.
FIG. 2 is a cross-sectional perspective diagram of the gas turbine engine of FIG. 1.
FIG. 3 is a perspective diagram depicting an exemplary embodiment of a nozzle assembly.
FIG. 4 is a schematic diagram depicting the sliding door of the embodiment of FIG. 3 in a planar view.

### DETAILED DESCRIPTION

Gas turbine engine systems involving variable nozzles with sliding doors are provided, several exemplary embodiments of which will be described in detail. In some embodiments, such a sliding door is moved fore and aft in a gas turbine engine to vary the nozzle exhaust area of the engine dynamically. Varying the nozzle exhaust area in a gas turbine engine can increase engine performance characteristics such as fuel efficiency.

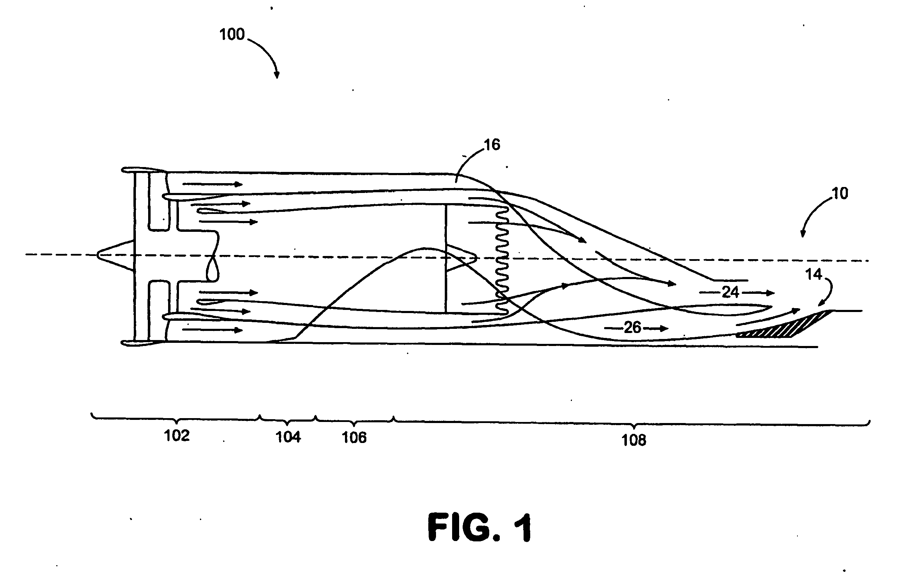

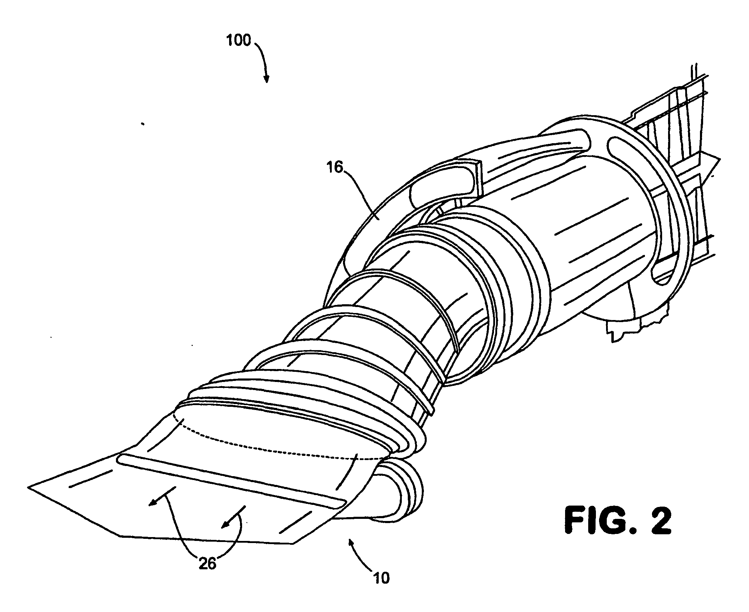

FIG. 1 is a schematic diagram depicting an exemplary embodiment of a gas turbine engine 100 in which a nozzle assembly 10 that incorporates a sliding door can be used to operatively vary the exit area 14 of the nozzle assembly 10 and affect engine performance. FIG. 2 is a cross-sectional perspective diagram of the gas turbine engine depicted in FIG. 1. As shown in both FIG. 1 and FIG 2, the gas turbine engine 100 includes a compressor section 102, a combustion section 104, a turbine section 106, and an exhaust section 108. It should be noted that although engine 100 is a turbofan engine, there is no intention to limit the concepts to use with turbofan engines as other types of gas turbine engines can be used.

The exhaust section 108 of gas turbine engine 100 includes nozzle assembly 10, which defines an exit area 14. In operation, gas is routed along a gas path 26, which passes through duct 16 to the nozzle assembly 10, and then out of the nozzle assembly via exit area 14. Performance of the gas turbine engine 100 can be affected by regulating gas directed along gas path 26 by influencing the gas in a vicinity of the exit area 14.

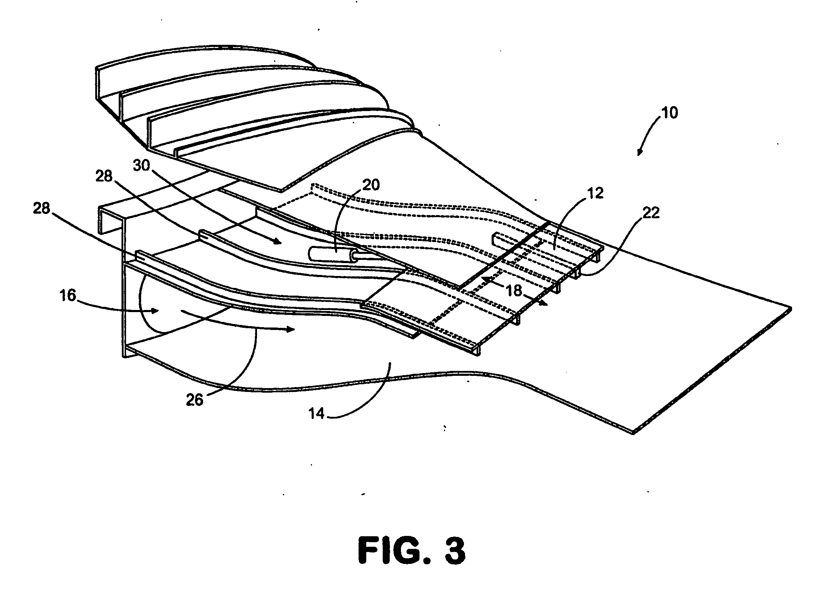

In this regard, reference is made to the perspective diagram of FIG. 3, which depicts nozzle assembly 10 and the incorporated sliding door 12. As shown in FIG. 3, sliding door 12 is configured to be translated across exit area 14 and thereby influence gas directed along gas path 26. The nozzle assembly is a third stream exhaust nozzle that is operative to regulate gas accelerated by a tertiary fan (e.g., a tip fan located radially outboard of a fan stage). A third stream nozzle helps enable the engine variable cycle. By way of example, by closing the third stream nozzle area, the third stream duct experiences increased backpressure and the fan air normally flowing into the third stream duct diverts into the secondary/primary flow stream. Notably, the flow streams communicate just aft of the fan. A third stream splitter, which can be located several inches aft of the fan, for example, leaves a large enough area for effective flow stream communication. However, in other embodiments, a nozzle assembly can be used for varying the flow characteristics of gas directed along one or more other gas paths.

The sliding door 12 is configured to be variably positioned along a range of positions between a full open position, at which the nozzle assembly 10 exhibits a maximum exit area, and a full closed position, at which the nozzle assembly 10 exhibits a minimum exit area. As the sliding door 12 is variably positioned, gas directed along gas path 26 is regulated.

In the embodiment of FIG. 3, sliding door 12 exhibits a low section area relative to a direction of travel associated with gas directed along gas path stream 26. Such a configuration and orientation tends to result in a low actuation load, i.e., the load required to be overcome for positioning of the door. In this regard, the nozzle assembly 10 also incorporates an actuator 20 that engages sliding door 12. The actuator 20 is attached to the sliding door 12 and is configured to operatively translate the sliding door 12 in both a fore and aft direction, as indicated by arrows 18.

By way of example, the actuator 20 can be an air motor driven direct actuated ball screw ram, direct actuated hydraulic ram, and air or hydraulic driven mechanisms. Actuator 20 may be singular or a plurality of synchronized actuators. For example, the actuator 20 includes air motor driven direct actuated ball screw rams (such as linear motion cylindrical actuators or rotary motion actuators), synchronized via flex drive cables (a commonly used actuation configuration in various commercial nacelle reverser cowlings). The actuator 20 can be located unobtrusively in an area 30 of the nozzle assembly 10 between gas path 26 and a core path 24.

In some embodiments, a nozzle assembly can also incorporate a pressurized plenum. Such a pressurized plenum can be configured to provide pressure balancing to the nozzle assembly thereby reducing actuation loads. If the loads are predicted to be reacted primarily by the tracks, a plenum may not be required. However, when a plenum is utilized (such as in association with area 30 in this embodiment), the plenum can be a direct acting plenum placed, for example, on the forward facing face of the door. Alternatively, a remote balance chamber can be utilized.

The nozzle assembly 10 also incorporates a rail 22 for the sliding door 12. The rail 22 facilitates the translation of the sliding door 12. In particular, the rail 22 provides a track on which the sliding door 12 is translated. The rail 22 also is configured to provide alignment and structural stability to the sliding door 12. In at least one embodiment, more than one rail 22 is utilized. In other embodiments, the rail 22 includes one or more bearings to facilitate a smoother translation of the sliding door 12 along the rail 22. In yet another embodiment, the tracks of the rail 22 can be embedded in the fixed structure ahead of the door 12, and/or along sides of the door, such that that door 12 is cantilevered aft and the tracks are hidden from the flowpath.

The nozzle assembly 10 also incorporates a plurality of stiffening ribs 28 to control deflection of the sliding door as the sliding door 12 is variably opened and closed. For example, as the sliding door 12 is variably closed, pressure increases within the duct 16. The plurality of stiffening ribs 28, located behind the interior wall of the duct 16, reduces deflection of the interior wall. The plurality of stiffening ribs 28 also provides structural support to the sliding door 12 as the door translates across the exit area 14 of the nozzle assembly 10.

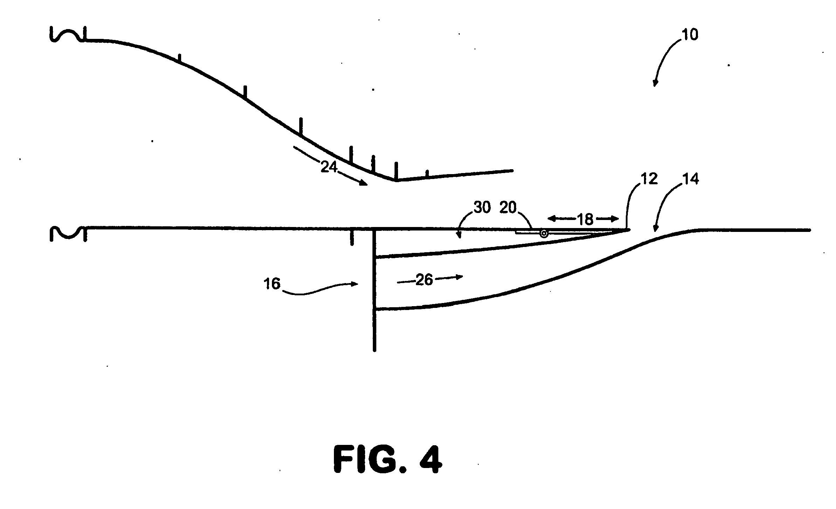

FIG. 4 is a schematic diagram depicting the nozzle assembly 10 of FIG 3. As shown in FIG 4, the gas path 26 includes passage through duct 16, the nozzle assembly 10 and exit area 14.

The actuator 20 is connected to the sliding door 12 and is configured to operatively translate the sliding door 12 in both a fore and aft direction, as indicated by arrows 18, thus varying the exit area 14 of the nozzle assembly 10. In operation, the sliding door 12 is variably opened and closed, by translating in both a fore and aft direction, as indicated by arrows 18. In other embodiments, more complex motion of the sliding door can be used. Regardless of the particular motion involved, positioning of the door varies the exit area 14 of the nozzle assembly 10 and thereby affects one or more of various engine performance characteristics.

It should be emphasized that the above-described embodiments are merely possible examples of implementations set forth for a clear understanding of the principles of this disclosure. Many variations and modifications may be made to the above-described embodiments without departing substantially from the principles of the disclosure. By way of example, in some embodiments, a sliding door can be configured to alter a nozzle throat asymmetrically in order to affect yaw vectoring of the flow. In some embodiments, this can be accomplished by the use of differential actuation of multiple actuators. All such modifications and variations are intended to be included herein within the scope of this disclosure and protected by the accompanying claims.

## Claims

1. A gas turbine engine (100) comprising:
a compressor (102);
a turbine (106) operative to drive the compressor;
a core path (24) receiving primary and secondary flow streams;
a third stream duct (16) defining a gas path (26), and
a third stream exhaust nozzle assembly (10) to regulate gas in said gas path (26); wherein:
said third stream exhaust nozzle assembly (10) is positioned downstream of the turbine (106), the nozzle assembly (10) defining an exit area (14) and having a door (12) operative to translate across said exit area (14) between an open position, at which the nozzle assembly (10) exhibits a maximum exit area (14), and a closed position, at which the nozzle assembly exhibits a minimum exit area (14).

2. The gas turbine engine of claim 1, further comprising an actuator (20) connected to the door (12) and operative to position or translate the door (12) whereby, for example, the nozzle exit area (14) is altered or the effective size of the nozzle exit area is established.

3. The gas turbine engine of claim 2, wherein the actuator (20) is operative to translate the door (12) in both fore and aft directions.

4. The gas turbine engine of claim 1, 2 or 3, further comprising at least one stiffening rib (28) operative to provide structural support to the door (12).

5. The gas turbine engine of claim 4, wherein said at least one stiffening rib (28) contacts said door (12).

6. The gas turbine engine of any preceding claim, wherein the at least one stiffening rib (28) is located on a non-gas path side of the door (12).

7. The gas turbine engine of any preceding claim, further comprising a rail (22) operative to provide alignment of the door (12).

8. The gas turbine engine of any of claims 1 to 6, further comprising:
a rail (22) operative to engage the door (12) such that engagement of the door (12) and the rail (22) facilitates alignment of the door (12) with the nozzle exit area (14).

9. The gas turbine engine of any of claims 1 to 6, further comprising:
a rail (22) engaging the door (12) and operative to provide alignment of the door (12) during positioning.

10. The gas turbine engine of any preceding claim, wherein the engine (100) is a turbofan gas turbine engine.

11. The gas turbine engine of any preceding claim, wherein the door (12) is operative to symmetrically affect the gas path (26) with respect to yaw.

12. The gas turbine engine of any preceding claim, further comprising a plenum located on a non-gas path side of the door (12), the plenum being operative to pressurize in order to reduce an actuation load of the door (12).

## Patentansprüche

1. Gasturbinenmaschine (100) umfassend:
einen Kompressor (102);
eine Turbine (106), die zum Antrieb des Kompressors betreibbar ist;
einen Kernweg (24), der eine primäre und eine sekundäre Strömung aufnimmt;
einen dritten Strömungsdurchgang (16), der einen Gasweg (26) definiert; und
eine dritte Strömungs-Auslassdüsenanordnung (10), um Gas in dem Gasweg (26) zu regulieren;
wobei die dritte Strömungs-Auslassdüsenanordnung (10) stromabwärts der Turbine (106) angeordnet ist, wobei die Düsenanordnung (10) einen Ausgangsbereich (14) definiert und eine Tür (12) aufweist, die derart betreibbar ist, dass sie sich über den Ausgangsbereich (14) zwischen einer geöffneten Postition, bei welcher die Düsenanordnung (10) einen maximalen Ausgangsbereich (14) aufweist, und einer geschlossenen Position, bei welcher die Düsenanordnung einen minimalen Ausgangsbereich (14) aufweist, zu verschiebt.

2. Gasturbinenmaschine nach Anspruch 1, des Weiteren umfassend einen Aktuator (20), der mit der Tür (12) verbunden ist und betreibbar ist, um die Tür (12) zu positionieren oder zu verschieben, wobei beispielsweise der Düsenausgangsbereich (14) verändert wird oder die effektive Größe des Düsenausgangsbereichs festgelegt wird.

3. Gasturbinenmaschine nach Anspruch 2, wobei der Aktuator (20) betreibbar ist, um die Tür (12) in sowohl eine vordere als auch eine hintere Richtung zu verschieben.

4. Gasturbinenmaschine nach Anspruch 1, 2 oder 3, des Weiteren umfassend zumindest eine Versteifungsrippe (28), die derart ausgebildet ist, dass sie eine Strukturstütze für die Tür (12) bereitstellt.

5. Gasturbinenmaschine nach Anspruch 4, wobei die zumindest eine Versteifungsrippe (28) die Tür (12) kontaktiert.

6. Gasturbinenmaschine nach einem der vorangehenden Ansprüche, wobei die zumindest eine Versteifungsrippe (28) auf einer Nicht-Gaswegseite der Tür (12) angeordnet ist.

7. Gasturbinenmaschine nach einem der vorangehenden Ansprüche, des Weiteren umfassend eine Schiene (22), die derart ausgebildet ist, dass sie eine Ausrichtung der Tür (12) bereitstellt.

8. Gasturbinenmaschine nach einem der Ansprüche 1 bis 6, des Weiteren umfassend:
eine Schiene (22), die derart ausgebildet ist, dass sie die Tür (12) derart in Eingriff zu nimmt, dass ein Eingriff der Tür (12) und der Schiene (22) eine Ausrichtung der Tür (12) mit dem Düsenausgangsbereich (14) ermöglicht.

9. Gasturbinenmaschine nach einem der Ansprüche 1 bis 6, des Weiteren umfassend:
eine Schiene (22), welche die Tür (12) in Eingriff nimmt und derart ausgebildet ist, dass sie eine Ausrichtung der Tür (12) während der Positionierung bereitstellt.

10. Gasturbinenmaschine nach einem der vorangehenden Ansprüche, wobei die Maschine (100) eine Turbobläser-Gasturbinenmaschine ist.

11. Gasturbinenmaschine nach einem der vorangehenden Ansprüche, wobei die Tür (12) derart betreibbar ist, dass sie auf den Gasweg (26) bezogen auf eine Gierbewegung symmetrisch einwirkt.

12. Gasturbinenmaschine nach einem der vorangehenden Ansprüche, des Weiteren umfassend ein Plenum, das auf einer Nicht-Gaswegseite der Tür (12) angeordnet ist, wobei das Plenum derart betreibbar ist, dass es eine Druckbeaufschlagung ausführt, um eine Aktuatorlast auf der Tür (12) zu reduzieren.

## Revendications

1. Moteur à turbine à gaz (100) comprenant :
un compresseur (102) ;
une turbine (106) opérant pour entrainer le compresseur ;
un chemin central (24) accueillant les flux d'écoulement primaire et secondaire ;
un troisième conduit d'écoulement (16) définissant une veine gazeuse (26) ; et
un ensemble de buse d'échappement de troisième écoulement (10) pour réguler le gaz dans ladite veine gazeuse (26) ;
dont ledit ensemble de buse d'échappement de troisième écoulement (10) est positionné en aval de la turbine (106), l'ensemble de buse (10) définissant une région de sortie (14) et comprenant une porte (12) opérant à travers ladite région de sortie (14) une translation entre une position ouverte, où l'ensemble de buse (10) présente une région de sortie (14) maximale et une position fermée, où l'ensemble de buse (10) présente une région de sortie (14) minimale.

2. Moteur à turbine à gaz selon la revendication 1, comprenant en outre un actionneur (20) relié à la porte (12) et opérant pour positionner ou déplacer la porte (12) de manière à, par exemple, modifier la région de sortie de la buse (14) ou déterminer la taille réelle de la région de sortie de la buse.

3. Moteur à turbine à gaz selon la revendication 2, dont l'actionneur (20) opère pour déplacer la porte (12) dans les sens avant et arrière.

4. Moteur à turbine à gaz selon les revendications 1, 2 ou 3, comprenant en outre au moins une nervure raidisseuse (28) opérant pour fournir un support structurel à la porte (12).

5. Moteur à turbine à gaz selon la revendication 4, dont l'au moins une nervure raidisseuse (28) est en contact avec ladite porte (12).

6. Moteur à turbine à gaz selon l'une quelconque des revendications précédentes, dont l'au moins une nervure raidisseuse (28) est située d'un côté non veine gazeuse de la porte (12).

7. Moteur à turbine à gaz selon l'une quelconque des revendications précédentes, comprenant en outre un rail (22) opérant pour assurer l'alignement de la porte (12).

8. Moteur à turbine à gaz selon l'une quelconque des revendications 1 à 6, comprenant en outre :
un rail (22) opérant pour coopérer avec la porte (12) de manière à ce que la coopération de la porte (12) et du rail (22) facilite l'alignement de la porte (12) avec la région de sortie de la buse (14).

9. Moteur à turbine à gaz selon l'une quelconque des revendications 1 à 6, comprenant en outre :
un rail (22) coopérant avec la porte (12) et opérant pour assurer l'alignement de la porte (12) durant le positionnement.

10. Moteur à turbine à gaz selon l'une quelconque des revendications précédentes, ledit moteur (100) étant un moteur à turbine à gaz à turboréacteur.

11. Moteur à turbine à gaz selon l'une quelconque des revendications précédentes, dont la porte (12) opère pour agir symétriquement sur la veine gazeuse (26) en fonction du lacet.

12. Moteur à turbine à gaz selon l'une quelconque des revendications précédentes, comprenant en outre une chambre de répartition située d'un côté non veine gazeuse de la porte (12), la chambre de répartition opérant pour produire une pressurisation afin de réduire la charge nécessaire à l'actionnement de la porte (12).
